Europäisches Patentamt

European Patent Office

Office européen des brevets

(11) Veröffentlichungsnummer: **0 314 826 B1**

# (12) EUROPÄISCHE PATENTSCHRIFT

(45) Veröffentlichungstag der Patentschrift: **29.01.92**

(51) Int. Cl.⁵: **A47J 37/08**

(21) Anmeldenummer: **87116163.4**

(22) Anmeldetag: **03.11.87**

(54) **Elektrischer Brotröster.**

(43) Veröffentlichungstag der Anmeldung:
**10.05.89 Patentblatt 89/19**

(45) Bekanntmachung des Hinweises auf die
Patenterteilung:
**29.01.92 Patentblatt 92/05**

(84) Benannte Vertragsstaaten:
**DE FR GB IT**

(56) Entgegenhaltungen:
**DE-C- 3 603 848**
**DE-U- 8 103 638**
**DE-U- 8 126 200**

(73) Patentinhaber: **STEINEL Entwicklungs-GmbH
für Elektrotechnik und Elektronik
Tannenweg 10
W-4840 Rheda-Wiedenbrück(DE)**

(72) Erfinder: **Schulze-Fröhlich, Dieter F., Dr.
Niggenkamp 17
W-4836 Herzebrock(DE)**
Erfinder: **Leder, Dietmar
Nordfeld 4
W-3257 Springe 2(DE)**
Erfinder: **Pettke, Felix
Theodor-Heuss-Strasse 6 B
W-4836 Herzebrock(DE)**
Erfinder: **Siwon, Hans
Erlenweg 1
W-8201 Obing(DE)**
Erfinder: **Langer, Lothar
Stromstrasse 11
W-4800 Bielefeld(DE)**

(74) Vertreter: **Patentanwälte Grünecker, Kinkeldey, Stockmair & Partner
Maximilianstrasse 58
W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen elektrischen Brotröster nach dem Oberbegriff des Anspruchs 1. Ein solcher Brotröster ist aus der DE-C-36 03 848 bekannt.

Bei dem bekannten Brotröster sind an den verlängerten Schenkeln der Bügel jeweils Lenker mit ihren einen Enden angelenkt, die über Kreuz verlaufen und mit ihren anderen Enden an Hebeln angelenkt sind, die im Gehäuse des Brotrösters schwenkbar gelagert sind. Zwischen diesen Hebeln befindet sich ein Drehzapfen unrunden Querschnitts, der mit einem im Gehäuse gelagerten Drehknopf verbunden ist und der bei Verdrehung die genannten Hebel auseinanderspreizt und damit die im Ruhezustand flachliegenden Bügel über das Gehäuse des Brotrösters aufrichtet. In dieser als Arbeitsstellung zu bezeichnenden Stellung sind die oberen Enden sowohl der Hebel als auch der Bügel nach außen geneigt. An den beiden Hebeln liegt von außen eine Rückstellfeder an, die beim Zurückdrehen des Drehknopfs die beiden Hebel wieder einander annähert und die Bügel in die flachliegende Ruhestellung einschwenkt.

Diese Anordnung ist relativ kompliziert, sie erfordert zusätzlich zur Herstellung und Montage der Bügel und des Drehknopfes die Herstellung und Montage der Lenker und der Hebel sowie der Rückstellfeder.

Der Erfindung liegt die Aufgabe zugrunde, einen Brotröster der eingangs genannten Art anzugeben, bei welchem auf zusätzliche Hebel und Lenker zur Verschwenkung der Bügel und auf eine Rückstellfeder verzichtet werden kann, um einen einfacheren Aufbau zu ermöglichen.

Diese Aufgabe wird durch die kennzeichnenden Merkmale des Anspruchs 1 gelöst. Vorteilhafte Ausgestaltungen der Erfindung sind Gegenstand der Unteransprüche.

Bei dem erfindungsgemäßen Brotröster greift ein an dem Drehknopf ausgebildeter Hebel, der mit dem Drehknopf starr verbunden ist und mit diesem daher einstückig ausgebildet werden kann, direkt am verlängerten Schenkel eines der Bügel an, und die Bewegung dieses Bügels bewirkt eine Mitverschwenkung des anderen Bügels. Die Bügel werden durch den Hebel am Drehknopf in der Arbeitsstellung gehalten und fallen beim Rückdrehen des Drehknopfs in ihre Ruhestellung zurück, ohne daß hierfür eine Unterstützung durch eine Rückstellfeder erforderlich ist.

Die Erfindung wird nachfolgend unter Bezugnahme auf in den Zeichnungen dargestellte Ausführungsbeispiele näher erläutert. Es zeigt:

Fig. 1    eine schematische Darstellung eines Brotrösters mit den Merkmalen der Erfindung in der Ruhestellung der Brötchenauflageeinrichtung;

Fig. 2    eine schematische Teildarstellung des Brotrösters nach Fig. 1 in der Arbeitsstellung der Brötchenauflageeinrichtung;

Fig. 3    Seitendarstellungen der Brötchenauflageeinrichtung von der Seite des Brotrösters aus gesehen in verschiedenen Stellungen, und zwar (a) in der Ruhestellung, (b) in einer ersten Zwischenstellung, (c) in einer zweiten Zwischenstellung und (d) in der Arbeitsstellung;

Fig. 4    einen ersten Bügel der Ausführungsform nach den Fig. 1 bis 3, und zwar (a) von oben, (b) längs des Schnittes B-B von Fig. 4(a), (c) von rechts, und (d) längs des Schnittes D-D von Fig. 4(a) in fünffach vergrößertem Maßstab;

Fig. 5    eine Darstellung des zweiten Bügels bei der Ausführungsform nach den Fig. 1 bis 3, und zwar (a) von oben, (b) längs des Schnittes B-B von Fig. 5(a), (c) von der Seite und (d) längs des Schnittes D-D von Fig. 5(a) in fünffach vergrößertem Maßstab;

Fig. 6    eine gegenüber Fig. 5 abgewandelte Ausführungsform in Ruhestellung der Brötchenauflageeinrichtung in schematischer Darstellung;

Fig. 7    eine Teildarstellung des Brotrösters nach Fig. 6 in der Arbeitsstellung der Brötchenauflageeinrichtung;

Fig. 8    eine dritte Ausführungsform der Erfindung;

Fig. 9    eine Teildarstellung der Ausführungsform nach Fig. 8 von der Außenseite des Brotrösters her gesehen, wobei die Ruhestellung der Brötchenauflageeinrichtung gestrichelt und die Arbeitsstellung in ausgezogenen Linien dargestellt sind;

Fig. 10    den ersten Bügel der Ausführungsform nach den Fig. 8 und 9, und zwar (a) von oben und (b) von der Seite, und

Fig. 11    den zweiten Bügel der Ausführungsform nach den Fig. 8 und 9, und zwar (a) von oben und (b) von der Seite.

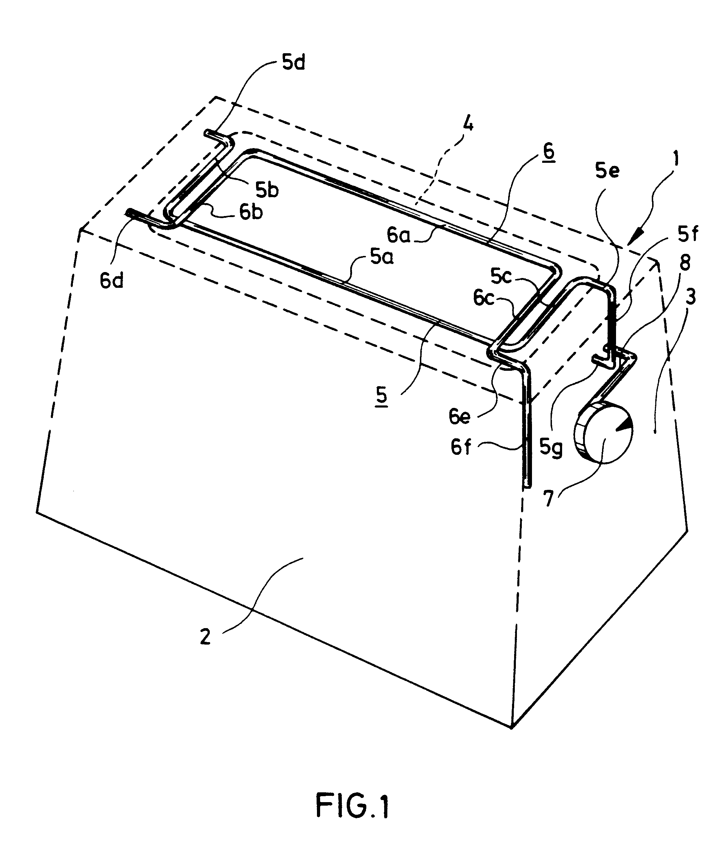

Der in Fig. 1 schematisch dargestellte Brotröster umfaßt ein Gehäuse 1, von dem eine Seitenwand 2 und eine Stirnwand 3 erkennbar sind und das im oberen Bereich in Phantomlinien dargestellt ist. In dem Gehäuse 1 ist ein vertikaler, oben offener Brotaufnahmeschacht ausgebildet, von welchem die Schachtöffnung 4 zu erkennen ist. Es sei angemerkt, daß in dem Gehäuse 1 ggf. zwei Schächte nebeneinander angeordnet sein können, die in eine gemeinsame obere Schachtöffnung im Gehäuse 1 münden.

Im Randbereich der Schachtöffnung 4 sind im Gehäuse 1 neben dem Schacht ein erster und ein zweiter abgekröpfter Bügel 5 bzw. 6 schwenkbar gelagert. Die Bügel weisen eine Gestalt auf, die im wesentlichen der eines sehr breitgezogenen U entspricht, bestehend jeweils aus einem Mittelschenkel 5a bzw. 6a und Seitenschenkeln 5b und 5c bzw. 6b und 6c. An die Seitenschenkel schließen sich nach außen abgekröpfte Lagerabschnitte 5d und 5e bzw. 6d und 6e an, die sich jeweils in denselben Ebenen erstrecken, die von den Bügelschenkeln 5a, 5b und 5c bzw. 6a, 6b und 6c aufgespannt werden. Diese abgekröpften Lagerabschnitte sind in an sich bekannter Weise in dem Gehäuse 1 drehbar gelagert, beispielsweise in hochstehenden Laschen, wie in der eingangs genannten DE-C-3 603 848 beschrieben. Aus Übersichtlichkeitsgründen ist dies in Fig. 1 nicht dargestellt. Auf der Seite der in Fig. 1 sichtbaren Stirnwand 3 des Gehäuses 1 sind die Bügel 5 und 6 über die abgekröpften Lagerabschnitte 5e und 6e hinaus in abgewinkelten Schenkeln 5f bzw. 6f verlängert, die in einer Ebene senkrecht zu dem zugehörigen abgekröpften Abschnitt abgewinkelt sind und deren Projektion mit dem sich an die zugehörige Abkröpfung anschließenden Seitenschenkel 5c bzw. 6c einen Winkel einschließt, der im dargestellten Beispiel bei etwa 90° liegt. Der Schenkel 5f des ersten Bügels 5 ist an seinem freien Ende fernerhin mit einer Abkröpfung 5g versehen, die gegen die Innenseite des Brotrösters gerichtet ist und achsparallel zu der Schwenkachse verläuft, die von den abgekröpften Lagerabschnitten 5d und 5e definiert wird.

Auf der Seite der Stirnwand 3 ist in dem Gehäuse 1 ein Drehknopf 7 drehbar gelagert, an dem starr ein Hebel 8 angebracht ist, der mit dem Drehknopf 7 als integrale Einheit ausgebildet sein kann, beispielsweise durch Spritzgießen. Dieser Hebel 8 kann sich an der der Drehachse des Drehknopfs 7 abgewandten Seite des verlängerten Schenkels 5f des Bügels 5 an diesen Schenkel 5f anlegen.

Wie aus Fig. 1 ersichtlich, liegt in der Ruhestellung der Mittelschenkel 5a des Bügels 5 nahe den abgekröpften Lagerabschnitten 6d und 6e des zweiten Bügels 6 unter dessen Seitenschenkeln 6b und 6c. Die Mittelschenkel und die Seitenschenkel der beiden Bügel 5 und 6 umgeben in der in Fig. 1 gezeigten Ruhestellung den lichten Umriß des Aufnahmeschachts.

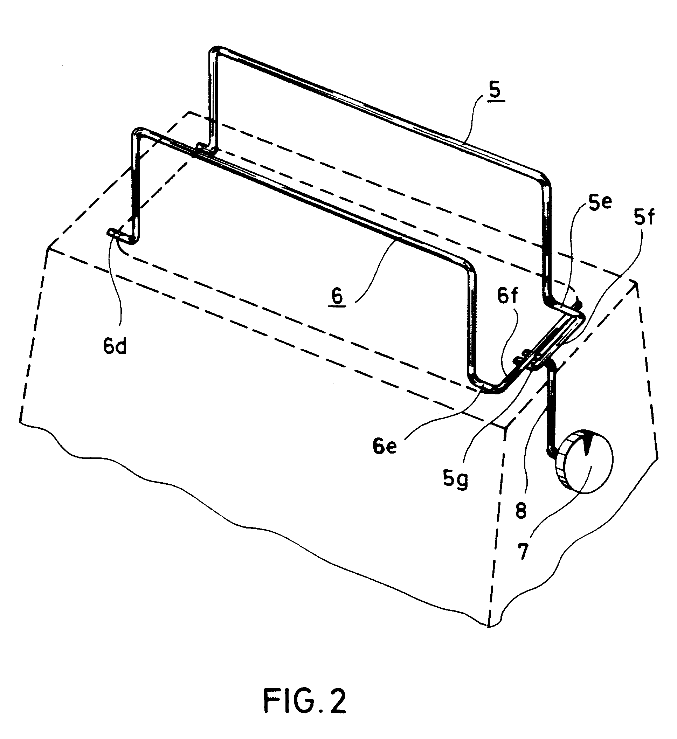

Fig. 2 zeigt den aufgerichteten Zustand, d.h. die Arbeitsstellung der Bügel 5 und 6 sowie des Drehknopfes 7 mit dem Hebel 8. In dieser Stellung verlaufen die Seitenschenkel der Bügel 5 und 6 vertikal oder annähernd vertikal, während ihre verlängerten Seitenschenkel 5f und 6f horizontal oder annähernd horizontal liegen. Wie aus Fig. 2 ersichtlich ist, hat der Seitenschenkel 6f des zweiten Bügels 6 eine Länge, die größer ist, als die Distanz der von den abgekröpften Lagerabschnitten 5d und 5e bzw. 6d und 6e definierten Schwenkachsen. Das freie Ende des verlängerten Schenkels 6f des zweiten Bügels 6 liegt unter dem gegenüberliegenden abgekröpften Abschnitt 5e des ersten Bügels 5, der für den Schenkel 6f einen Anschlag darstellt. Die Abkröpfung 5g am freien Ende des verlängerten Schenkels 5f des ersten Bügels 5 liegt unter dem verlängerten Schenkel 6f des zweiten Bügels 6 und hält diesen in der angehobenen Stellung, während der verlängerte Schenkel 5f des ersten Bügels 5 selbst durch den Hebel 8 am Drehknopf 7 von unten abgestützt ist.

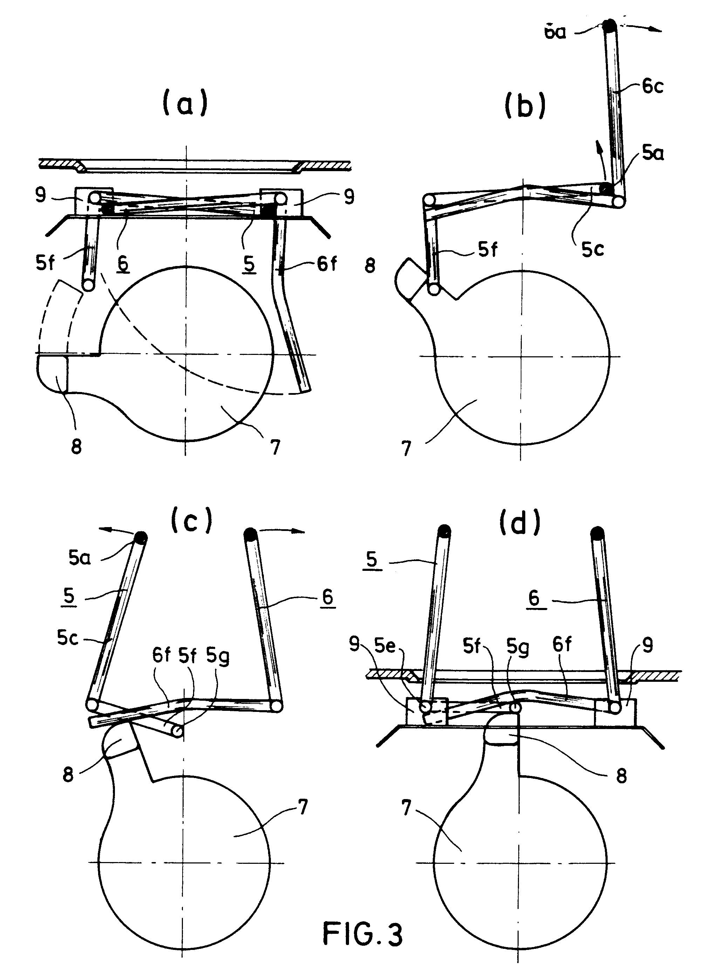

Die Bewegungsphasen zum Aufrichten der Bügel 5 und 6 aus ihrer Ruhelage in die Arbeitsstellung sind in Fig. 3 anschaulich dargestellt. Fig. 3(a) zeigt die Bügel 5 und 6 flachliegend, so daß ihre verlängerten Schenkel 5f und 6f im wesentlichen vertikal verlaufen. Die Darstellung in Fig. 3 ist von der Innenseite des Brotrösters her gesehen, weshalb hier die Dreh- und Schwenkrichtungen umgekehrt erscheinen. Beim Verdrehen des Drehknopfes 7 aus der in Fig. 3(a) dargestellten Ruhestellung gelangt der Hebel 8 am Drehknopf 7 in Berührung mit dem verlängerten Schenkel 5f des ersten Bügels 5. Bei Fortsetzung der Drehbewegung des Drehknopfes 7 wird der erste Bügel 5 verschwenkt. Bereits zu Beginn seiner Aufrichtbewegung hebt der Mittelschenkel 5a des ersten Bügels 5 die Seitenschenkel 6b und 6c (in Fig. 3 ist nur der eine Seitenschenkel 6c dargestellt) an, wodurch der zweite Bügel 6 insgesamt fast völlig aufgerichtet wird. Bei Fortsetzung der Drehbewegung des Drehknopfes 7 wird der erste Bügel 5 weiter aufgerichtet. Sein Mittelschenkel 5a verläßt dann die Berührung mit den Seitenschenkeln des zweiten Bügels 6. In diesem Zustand wird der verlängerte Schenkel 6f des zweiten Bügels 6 von dem Hebel 8 abgestützt, wie Fig. 3(c) zeigt. Wird dann der Drehknopf 7 in seine Arbeitsendstellung weitergedreht, gelangt die Abkröpfung 5g am freien Ende des verlängerten Schenkels 5f des ersten Bügels 5 von unten in Anlage an den verlängerten Schenkel 6f des zweiten Bügels 6. Das freie Ende des verlängerten Schenkels 6f des zweiten Bügels 6 liegt von unten an dem abgekröpften Lagerabschnitt 5e des ersten Bügels 5. Die beiden Bügel 5 und 6 sind auf diese Weise in ihrer Arbeitsstellung festgelegt. Zweckmäßigerweise ist ein (in der Zeichnung nicht dargestellter) Anschlag für den Drehknopf 7 vorgesehen, der verhindert, daß dieser über die in Fig. 3(d) gezeigte Stellung hinaus weitergedreht werden kann.

Dreht man den Drehknopf 7 in seine Ruhestellung zurück, dann schwenken die Bügel 5 und 6 aufgrund ihres Eigengewichts in ihre Ruhestellung zurück. Dies erfolgt auch dann, wenn ihre Seitenschenkel in der Arbeitsstellung senkrecht stehen, weil die verlängerten Schenkel 5f und 6f aufgrund ihres Eigengewichts ein entsprechendes Drehmoment erzeugen.

Aus den Fig. 3(a) und 3(d) gehen zugleich auch Lagerlaschen 9 hervor, in denen die abgekröpften Lagerabschnitte der beiden Bügel schwenkbar gelagert sind. Diese Lagerlaschen 9 sind Bestandteil des Brotrösters und an dessen innerer Struktur ausgebildet, vorzugsweise durch Ausklinkung von Chassisteilen gebildet.

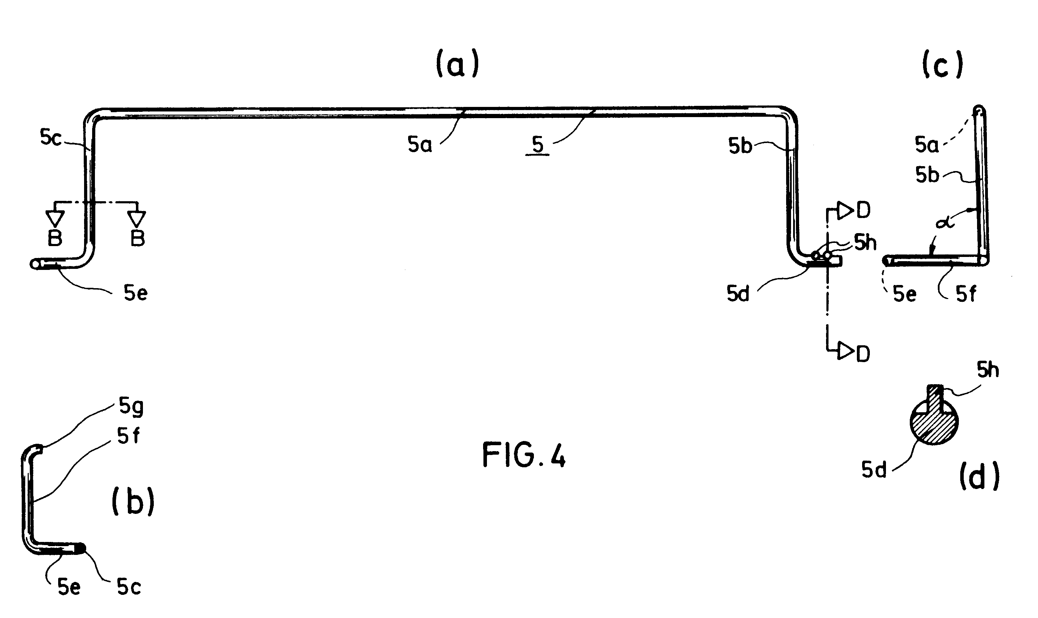

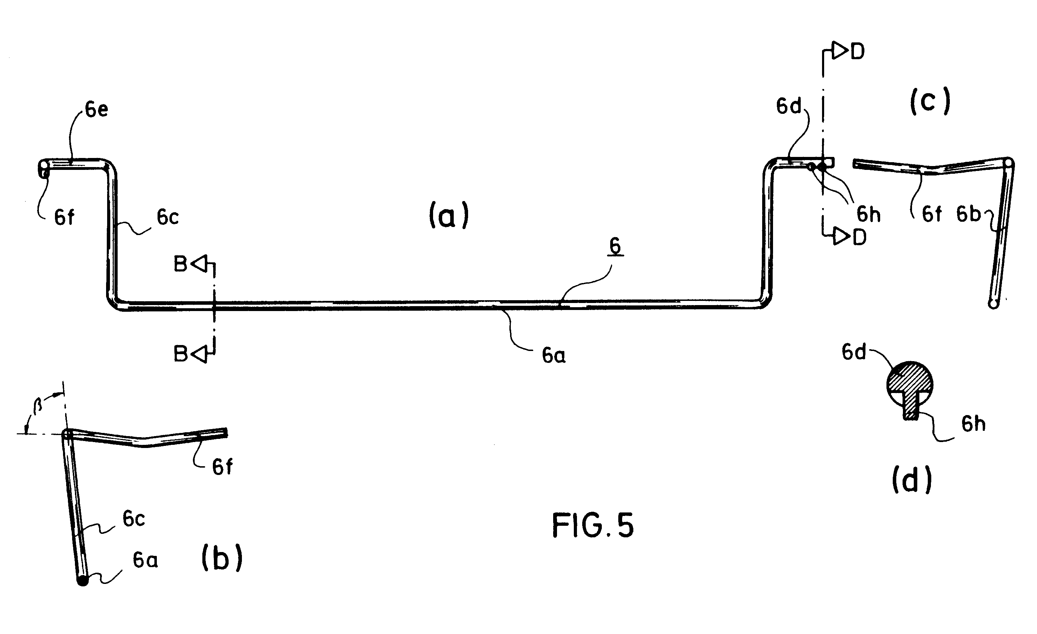

In den Fig. 4 und 5 erkennt man die Gestalt der beiden Bügel 5 und 6. Diese Bügel sind in den beiden Figuren etwa maßstabsgerecht dargestellt. Sie bestehen vorzugsweise aus Draht, der mit PTFE umspritzt ist. Man erkennt die Mittelschenkel 5a bzw. 6a, die relativ lang sind, und die kürzeren Seitenschenkel 5b und 5c bzw. 6b und 6c, an die sich die abgekröpften Lagerabschnitte 5d und 5e bzw. 6d und 6e anschließen, von denen die Lagerabschnitte 5e und 6e in abgewinkelte, verlängerte Schenkel 5f bzw. 6f übergehen. Die abgekröpften Lagerabschnitte 5d und 6d an der der in Fig. 1 sichtbaren Stirnwand abgewandten Seite sind jeweils mit zwei im Abstand zueinander angeordneten, durch Pressung erzeugten Vorsprüngen 5h bzw. 6h versehen, die in den Fig. 4(d) bzw. 5(d) in fünffacher Vergrößerung im Schnitt dargestellt sind. Diese Vorsprünge 5h bzw. 6h dienen der Festlegung der Bügel in axialer Richtung der von den abgekröpften Lagerabschnitten definierten Schwenkachsen in den zugehörigen Lagerlaschen 9.

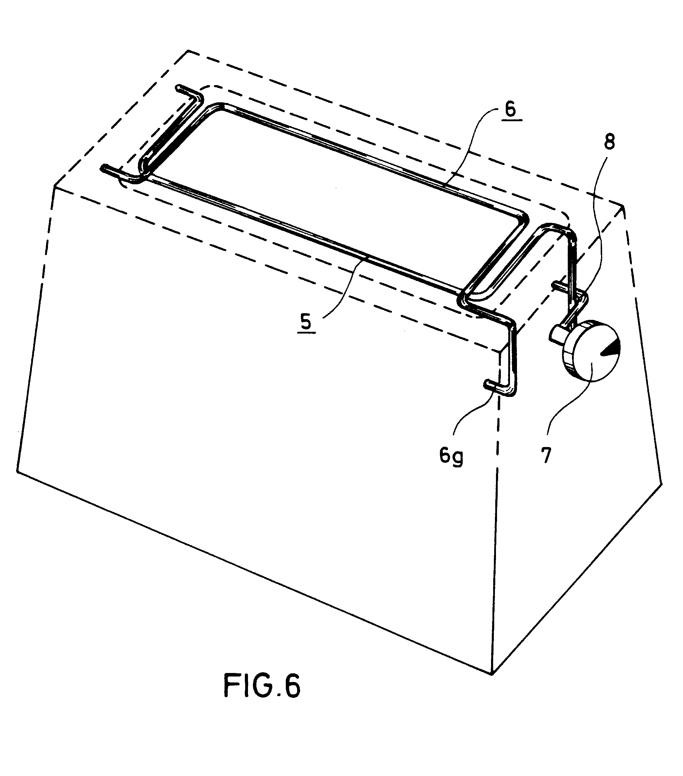

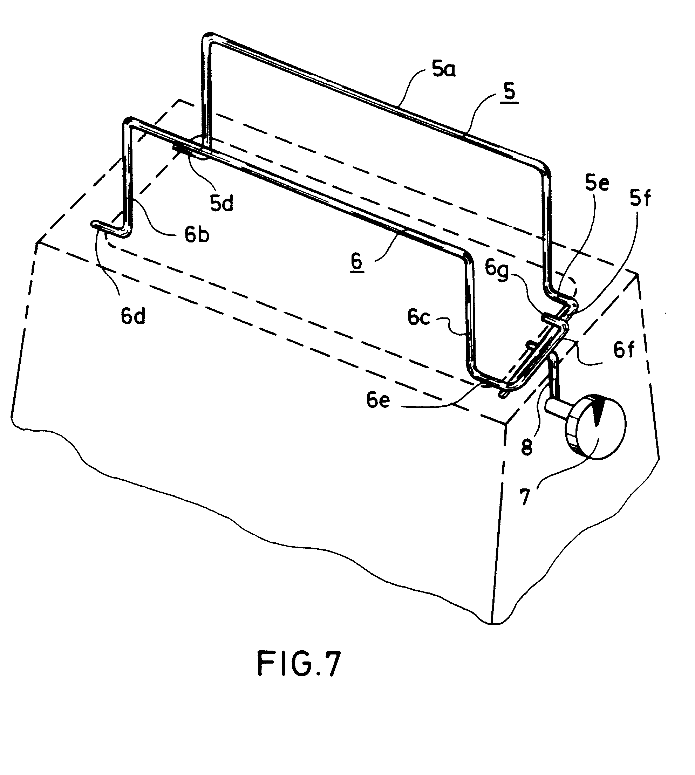

Die Fig. 6 und 7 zeigen eine der Ausführungsform nach Fig. 1 und 2 im wesentlichen entsprechende Ausführungsart der Erfindung, für die die vorerwähnte Erläuterung im wesentlichen in gleicher Weise gilt. Sie unterscheidet sich von der Ausführungsform nach den Fig. 1 und 2 dadurch, daß an dem verlängerten Schenkel jenes Bügels, nämlich des zweiten Bügels 6, der von dem Hebel 8 des Drehknopfes 7 nicht direkt beaufschlagt wird, eine Abkröpfung 6g ausgebildet ist. Diese Abkröpfung 6g bildet beim Aufrichten der Bügel 5 und 6 einen Mitnehmer für den Bügel 6. Sie liegt, wie Fig. 7 zeigt, im aufgerichteten Zustand über dem verlängerten Schenkel 5f am ersten Bügel 5.

Der Aufrichtvorgang vollzieht sich in ähnlicher Weise, wie unter Bezugnahme auf die erste Ausführungsform erläutert. Zunächst wird der zweite Bügel 6 durch leichtes Verschwenken des ersten Bügels 5 fast vollständig aufgerichtet. Wenn dann der Mittelschenkel 5a entsprechend der Darstellung in Fig. 3(c) die Berührung mit den Seitenschenkeln 6b und 6c des zweiten Bügels 6 verläßt bzw. verlassen hat, wird ein Zurückschwenken des zweiten Bügels 6 in die Ruhelage durch die Abkröpfung 6g verhindert, die von dem verlängerten Schenkel 5f am ersten Bügel 5 von unten abgestützt wird.

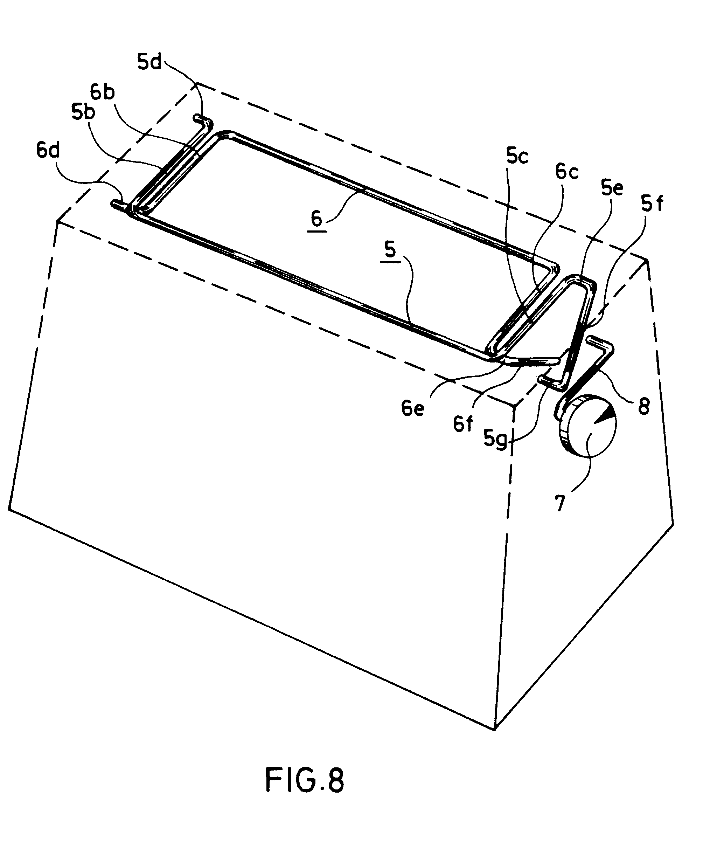

Fig. 8 zeigt eine dritte Ausführungsform der Erfindung, die gegenüber den zuvor erläuterten Ausführungsformen den Vorteil aufweist, daß die anfänglichen Betätigungskräfte zum Aufrichten der Bügel vergleichsweise gering sind. In dieser Ausführungsform sind die einander entsprechenden Elemente mit übereinstimmenden Bezugszeichen versehen, so daß auf deren nochmalige Erläuterung verzichtet werden kann.

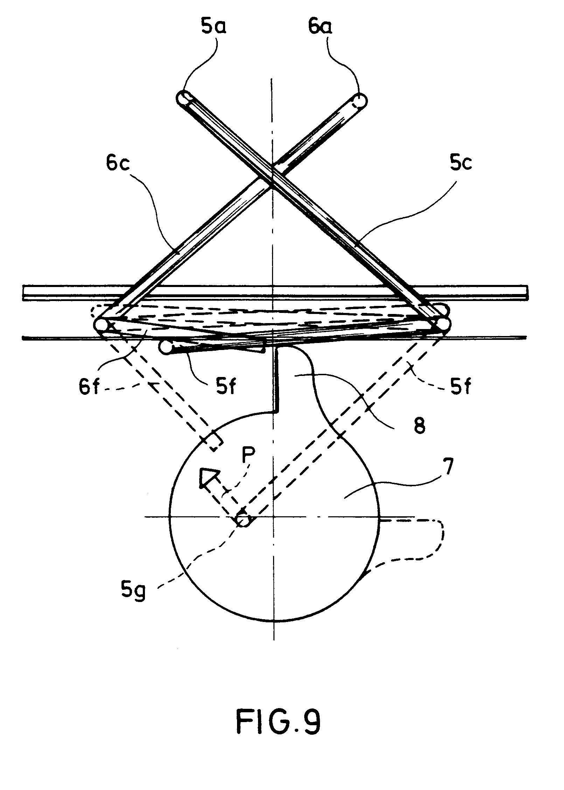

Die Ausführungsform nach Fig. 8 unterscheidet sich von den vorangehenden im wesentlichen dadurch, daß die Winkel, die die Projektionen der verlängerten Schenkel 5f bzw. 6f mit den Seitenschenkeln 5c bzw. 6c der Bügel einschließen, der sogenannte Versatzwinkel, sehr viel kleiner ist, als bei den erstgenannten Ausführungsbeispielen. Dieser Winkel liegt im dargestellten Beispiel im Bereich zwischen 35 und 50$^\circ$. Im flachliegenden Zustand, d.h. in der Ruhestellung der Bügel 5 und 6 verlaufen daher die verlängerten Schenkel 5f und 6f schräg und nehmen die Seitenschenkel der Bügel in der aufgerichteten Stellung (Arbeitsstellung) der Brötchenauflageeinrichtung eine geneigte Lage ein. Dieser aufgerichtete Zustand ist schematisch in Fig. 9 dargestellt.

Wie sich aus Fig. 9 ergibt, ist an dem verlängerten Schenkel 5f des ersten Bügels 5 die Abkröpfung 5g ausgebildet. Diese Abkröpfung 5g beschreibt beim Aufrichten der Brötchenauflageeinrichtung, die durch Drehen des Drehknopfes 7 entgegen dem Uhrzeigersinn bewirkt wird, einen Weg, der in Fig. 9 durch den Pfeil P dargestellt ist. Im Bewegungsweg P der Abkröpfung 5g befindet sich der verlängerte Schenkel 6f des anderen Bügels 6, der in Fig. 9 in der Ruhestellung gestrichelt dargestellt ist. Durch das Verschwenken des verlängerten Schenkels 5f im Uhrzeigersinn legt sich daher die Abkröpfung 5g an die Unterseite des verlängerten Schenkels 6f des zweiten Bügels 6 an und verschwenkt diesen Schenkel entgegen dem Uhrzeigersinn nach oben, wodurch der zweite Bügel 6 aufgerichtet wird. Die aufgerichtete Stellung ist in Fig. 9 ausgezogen dargestellt. Aufgrund günstigerer Hebelverhältnisse ist das am Drehknopf 7 aufzubringende Drehmoment über die gesamte wirksame Phase wesentlich herabgesetzt.

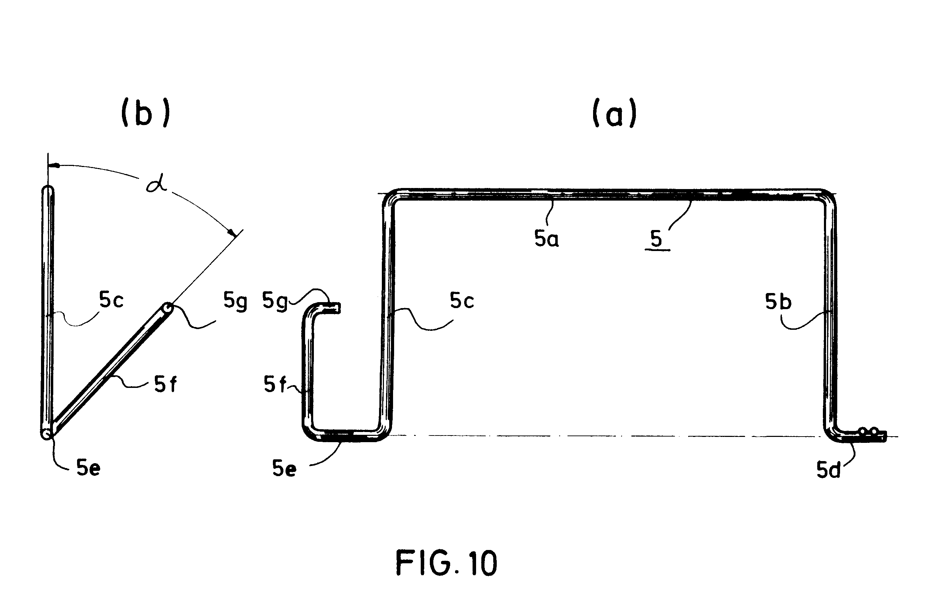

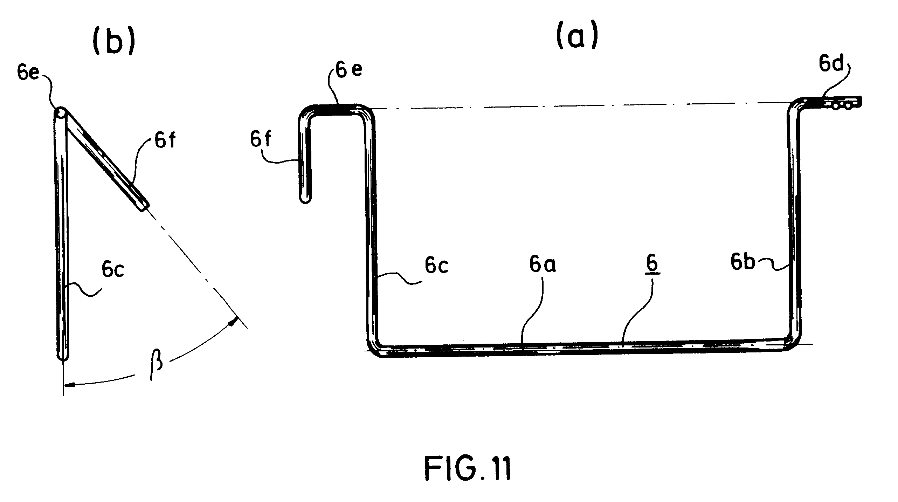

Die Fig. 10 und 11 zeigen die Bügel 5 und 6 der Ausführungsform nach Fig. 8 in Draufsicht und von der Seite. Im wesentlichen ist erwähnenswert, daß die vorerwähnten Versatzwinkel $\alpha$ bzw. $\beta$ bei den Bügeln 5 und 6 beim dargestellten Ausführungsbeispiel bei 42$^\circ$ bzw. 37$^\circ$ liegen. Wichtig ist,

daß der verlängerte Schenkel 5f am ersten Bügel lang genug ist, daß die Abkröpfung 5g von unten auf den verlängerten Schenkel 6f am zweiten Bügel treffen kann.

Auch bei dieser Ausführungsform der Erfindung ist eine Feder zum Rückstellen der Bügel entbehrlich. Sie kippen beim Drehen des Drehknopfes 7 im Uhrzeigersinn von selbst in ihre Ruhelage zurück.

Es sei schließlich angemerkt, daß gemäß einer in den Zeichnungen nicht dargestellten Abwandlung der Ausführungsform nach den Fig. 8 und 9 die Abkröpfung am verlängerten Schenkel des zweiten Bügels ausgebildet sein kann, um vom verlängerten Schenkel 5f des ersten Bügels beim Verschwenken desselben getroffen und mitgenommen zu werden. Es ist jedoch auf eine geeignete Winkelkonstellation zu achten, d.h. der zwischen den verlängerten Schenkeln bei gegenseitiger Berührung eingeschlossene Winkel sollte ausreichend größer als 90° sein, um Klemmwirkungen zu vermeiden, deren Überwindung ein zu starkes Drehmoment erfordern würde.

**Patentansprüche**

1. Elektrischer Brotröster mit einem aus Seitenwänden (2) und Stirnwänden (3) bestehenden Gehäuse (1), das wenigstens einen vertikal angeordneten, oben offenen Brotscheiben-Aufnahmeschacht umgibt, und einer Auflageeinrichtung für Brötchen oder dergleichen aus zwei im wesentlichen U-förmigen Bügeln (5) (6) aus Draht oder dergleichen jeweils mit einem Mittelschenkel (5a;6a) und zwei Seitenschenkeln (5b,5c;6b,6c), wobei die Seitenschenkel (5b,5c;6b,6c) an ihren dem Mittelschenkel (5a;6a) abgewandten Enden mit abgekröpften Lagerabschnitten (5e,6e) versehen sind, die im Bereich der Stirnwände (3) des Gehäuses (1) in einer über der Schachtöffnung (4) liegenden Ebene schwenkbar gelagert sind und im Bereich einer der Stirnwände (3) jeweils durch einen Schenkel (5f,6f) verlängert sind, der senkrecht zur Achse des abgekröpften Lagerabschnitts (5e,6e) abgewinkelt ist und dessen Axialprojektion mit dem zugehörigen Seitenschenkel (5c,6c) des Bügels (5,6) einen Versatzwinkel einschließt, und mit einer Einrichtung zur Aufrichtung der Bügel (5,6) aus einer flachliegenden Ruhelage, in der die Bügel (5,6) neben der Schachtöffnung (4) liegen, in eine aufgerichtete Arbeitsstellung, in der sie sich über das Gehäuse (1) erheben, die einen im Gehäuse (1) gelagerten, von außen zugänglichen Drehknopf (7) umfaßt, der zwischen einer Ruhestellung und einer Arbeitsstellung verdrehbar ist, **dadurch gekennzeichnet, daß** der Versatzwinkel ($\alpha$, $\beta$) an den Bügeln (5, 6) kleiner als ein Winkel ist, der 90° nicht wesentlich übersteigt, der Drehknopf (7) einen starr mit ihm verbundenen Hebel (8) aufweist, der beim Drehen des Drehknopfs (7) aus der Ruhestellung in die Arbeitsstellung an der seiner Drehachse abgewandten Seite des verlängerten Schenkels (5f) des einen (ersten) Bügels (5) in Anlage kommt und diesen verschwenkt, an demselben Bügel (5) eine Mitnehmereinrichtung (5a, 5g) integral ausgebildet ist, die beim Verschwenken dieses Bügels (5) den anderen (zweiten) Bügel (6) in entgegengesetztem Drehsinn mitverschwenkt.

2. Brotröster nach Anspruch 1, **dadurch gekennzeichnet, daß** am freien Ende des verlängerten Schenkels (5f) des ersten Bügels (5) eine parallel zur Schwenkachse des Bügels (5) verlaufende Abkröpfung (5g) ausgebildet ist, die in der Arbeitsstellung dieses Bügels (5) unter dem verlängerten Schenkel (6f) des zweiten Bügels (6) liegt und diesen in der Arbeitsstellung hält.

3. Brotröster nach Anspruch 1, **dadurch gekennzeichnet, daß** am freien Ende des verlängerten Schenkels (6f) des zweiten Bügels (6) eine parallel zur Schwenkachse des Bügels (6) verlaufende Abkröpfung (6g) ausgebildet ist, die in der Arbeitsstellung dieses Bügels (6) über dem verlängerten Schenkel (5f) des ersten Bügels (5) liegt und den zweiten Bügel (6) in der Arbeitsstellung festhält.

4. Brotröster nach Anspruch 2, **dadurch gekennzeichnet, daß** der verlängerte Schenkel (6f) des zweiten Bügels (6) eine Länge aufweist, die größer ist, als die Distanz zwischen den Schwenkachsen der beiden Bügel (5, 6).

5. Brotröster nach Anspruch 3, **dadurch gekennzeichnet, daß** der verlängerte Schenkel (5f) des ersten Bügels (5) eine Länge aufweist, die größer ist, als die Distanz zwischen den Schwenkachsen der beiden Bügel (5, 6).

6. Brotröster nach Anspruch 2 oder 3, **dadurch gekennzeichnet, daß** der Versatzwinkel ($\alpha$, $\beta$) bei beiden Bügeln etwas weniger als 90° beträgt.

7. Brotröster nach Anspruch 1, **dadurch gekennzeichnet, daß** die Versatzwinkel ($\alpha$, $\beta$) an den Bügeln (5, 6) jeweils etwa 35° bis 50° betragen, der verlängerte Schenkel (5f) des ersten Bügels (5) an seinem freien Ende eine parallel zur Schwenkachse des Bügels (5) verlaufende Abkröpfung (5g) aufweist und der verlängerte Schenkel (6f) des zweiten Bügels (6) sich im Bewegungsweg (P) der Abkröpfung (5g) befindet.

8.  Brotröster nach Anspruch 1, **dadurch gekennzeichnet,** daß die Versatzwinkel an beiden Bügeln kleiner als 45° sind und der verlängerte Schenkel des zweiten Bügels an seinem freien Ende eine parallel zur Schwenkachse des Bügels verlaufende Abkröpfung aufweist, die sich im Bewegungsweg des verlängerten Schenkels des ersten Bügels befindet.

9.  Brotröster nach einem der vorhergehenden Ansprüche, **dadurch gekennzeichnet,** daß dem Drehknopf wenigstens ein Anschlag zur Begrenzung seiner Bewegung wenigstens in der Arbeitsstellung zugeordnet ist.

## Claims

1.  Electric toaster with a casing (1) which comprises side walls (2) and end walls (3) and surrounds at least one vertically arranged, upwardly open receiving well for slices of bread, and with a supporting device for rolls or the like comprising two essentially U-shaped hoops (5, 6) of wire or the like, each with a central limb (5a; 6a) and two lateral limbs (5b, 5c; 6b, 6c), the lateral limbs (5b, 5c; 6b, 6c) being provided at their ends facing away from the central limb (5a; 6a) with offset bearing portions (5e, 6e) which, in the region of the end walls (3) of the casing (1), are swivellably mounted in a plane lying above the well opening (4) and, in the region of one of the end walls (3), are in each case extended by a limb (5f, 6f) which is angled perpendicularly to the axis of the offset bearing portion (5e, 6e) and the axial projection of which encloses an offset angle with the associated lateral limb (5c, 6c) of the hoop (5, 6), and with a device for raising the hoops (5, 6) out of the rest position, in which the hoops (5, 6) lie flat, next to the well opening (4), into a raised working position, in which they rise above the casing (1), which device includes a knob (7) which is mounted in the casing (1), is accessible from the outside and can be rotated between a rest position and a working position, characterised in that the offset angle (α, β) on the hoops (5, 6) is smaller than an angle which does not substantially exceed 90°, the knob (7) has a lever (8) which is rigidly connected to it, upon rotation of the knob (7) out of the rest position into the working position, comes to rest against that side of the extended limb (5f) of one (the first) hoop (5) which faces away from its axis of rotation and swivels the said hoop, a driver device (5a, 5g) is integrally formed on the same hoop (5) and, when this hoop (5) is swivelled, concomitantly swivels the other (second) hoop (6) in the opposite direction of rotation.

2.  Toaster according to Claim 1, characterised in that, formed at the free end of the extended limb (5f) of the first hoop (5), there is an offset (5g) which extends parallel to the swivelling axis of the hoop (5) and, in the working position of this hoop (5), lies under the extended limb (6f) of the second hoop (6) and holds the latter in the working position.

3.  Toaster according to Claim 1, characterised in that, formed at the free end of the extended limb (6f) of the second hoop (6), there is an offset (6g) which extends parallel to the swivelling axis of the hoop (6) and, in the working position of this hoop (6), lies over the extended limb (5f) of the first hoop (5) and holds the second hoop (6) firmly in the working position.

4.  Toaster according to Claim 2, characterised in that the extended limb (6f) of the second hoop (6) is longer than the distance between the swivelling axes of the two hoops (5, 6).

5.  Toaster according to Claim 3, characterised in that the extended limb (5f) of the first hoop (5) is longer than the distance between the swivelling axes of the two hoops (5, 6).

6.  Toaster according to Claim 2 or 3, characterised in that the offset angle (α, β) is somewhat less than 90° in the case of both hoops.

7.  Toaster according to Claim 1, characterised in that the offset angles (α, β) on the hoops (5, 6) are in each case about 35° to 50°, the extended limb (5f) of the first hoop (5) has, at its free end, an offset (5g) extending parallel to the swivelling axis of the hoop (5), and the extended limb (6f) of the second hoop (6) is situated in the path (P) of motion of the offset (5g).

8.  Toaster according to Claim 1, characterised in that the offset angles on both hoops are smaller than 45° and the extended limb of the second hoop has, at its free end, an offset which extends parallel to the swivelling axis of the hoop and is situated in the path of motion of the extended limb of the first hoop.

**9.** Toaster according to one of the preceding claims, characterised in that the knob is assigned at least one stop for limiting its movement at least in the working position.

**Revendications**

**1.** Grille-pain électrique, avec un carter (1), composé de parois latérales (2) et de parois frontales (3), qui entoure au moins un puits de réception de tranches de pain, disposé verticalement, ouvert vers le haut, et avec un dispositif de pose pour des petits pains ou analogue, composé de deux étriers (5,6) sensiblement en forme de U, en fil métallique ou analogue, comportant chacun une aile centrale (5a;5a) et de deux ailes latérales (5b,5c;6b,6c), les ailes latérales (5b,5c;6b,6c) étant pourvues, a leurs extrémités opposées à l'aile centrale (5a;6a), de sections de support (5e, 6e) coudées, montées pivotantes dans un plan situé au-dessus de l'ouverture de puits (4), dans la zone des parois frontales (3) du carter (1), et prolongées chacune dans la zone de l'une des parois frontales (3) par une aile (5f, 6f), qui est repliée perpendiculairement par rapport a l'axe de la section d'appui coudée (5e, 6e) et dont la projection axiale fait avec l'aile latérale (5c,6c) correspondante de l'étrier un angle de déport, et avec un dispositif pour orienter les étriers (5,6), à partir d'une position de repos à plat, dans laquelle les étriers sont placés à côté de l'ouverture de puits (4), en une position de travail montante, dans laquelle ils s'élèvent au-dessus du carte (1), dispositif comprenant un bouton tournant (7) monté dans le carter, accessible de l'extérieur, susceptible d'être tourné entre une position de repos et une position de travail, caractérisé en ce que l'angle de déport ($\alpha,\beta$) des étriers (5,6) est inférieur a un angle qui ne dépasse pratiquement pas 90$^\circ$, le bouton tournant (7) présentant un levier (8) lui étant relié rigidement, qui, lors de la rotation du bouton tournant (7) hors de la position de repos en passant a la position de travail, vient en appui sur la face, opposée a son axe de rotation, de la branche prolongée (5f) d'un (premier) étrier (5) et le fait pivoter, un dispositif d'entraînement (5a,5g) étant réalisé d'une seule pièce sur ce même étrier (5) et fait pivoter conjointement, dans le sens de rotation opposé, l'autre (deuxième) étrier (6) lors du pivotement de l'étrier (5).

**2.** Grille-pain selon la revendication 1, caractérisé en ce qu à l'extrémité libre de l'aile prolongée (5f) du premier étrier (5) est réalisé un coude (5g) qui s'étend parallèlement à l'axe de pivotement de l'étrier (5) et qui, lorsque l'étrier (S) est en position de travail, est situé sous l'aile prolongée (6f) du deuxième étrier (6) et le maintient en position de travail.

**3.** Grille-pain selon la revendication 1, caractérisé en ce qu'à l'extrémité libre de l'aile prolongée (6f) du deuxième étrier (5) est réalisé un coude (6g) qui s'étend parallèlement à l'axe de pivotement de l'étrier (6) et qui, lorsque l'étrier (6) est en position de travail, est situé au-dessus de l'aile prolongée (5f) du premier étrier (5) et maintient Te deuxième étrier (6) en position de travail.

**4.** Grille-pain selon la revendication 2, caractérisé en ce que l'aile prolongée (6f) du deuxième étrier (6) présente une longueur supérieure à la distance entre les axes de pivotement des deux étriers (5, 6).

**5.** Grille-pain selon la revendication 3, caractérisé en ce que l'aile prolongée (5f) du premier étrier (5) présente une longueur supérieure à la distance entre les axes de pivotement des deux étriers (5,6).

**6.** Grille-pain selon la revendication 2 ou 3, caractérisé en ce que l'angle de déport ($\alpha,\beta$) des deux étriers est légèrement inférieur à 90$^\circ$

**7.** Grille-pain selon la revendication 1, caractérisé en ce que les angles de déport ($\alpha,\beta$) des étriers (5,6) font respectivement à peu près 35$^\circ$ à 50$^\circ$, l'aile prolongée (5f) du premier étrier (5) présentant à son extrémité libre un coude (5g) qui s'étend parallèlement à l'axe de pivotement de l'étrier (5) et l'aile prolongée (6f) du deuxième étrier (6) se trouvant sur la trajectoire de déplacement (P) du coude (5g).

**8.** Grille-pain selon la revendication 1, caractérisé en ce que les angles de déport sur les deux étriers sont inférieurs à 45$^\circ$ et l'aile prolongée du deuxième étrier présente à son extrémité libre un coude qui s'étend parallèlement à l'axe de pivotement de l'étrier et se trouve dans la trajectoire de déplacement de l'aile prolongée du premier étrier.

**9.** Grille-pain selon l'une des revendications précédentes, caractérisé en ce qu'au moins une butée servant à limiter le déplacement du bouton tournant est associée à ce dernier, au moins dans sa position de travail.

FIG.1

FIG.2

FIG.3

(a)

(c)

5c

5a

5

5b

5a
5b

α

B B

5e

5d

5h

D

D

5e 5f

EP 0 314 826 B1

5g
5f

5h

FIG. 4

(b)

5d

(d)

5e 5c

FIG. 5

EP 0 314 826 B1

FIG.6

FIG.7

FIG.8

FIG.9

FIG.10

FIG.11